# EUROPEAN PATENT SPECIFICATION

(11) **EP 0 505 107 B1**
(45) Date of publication and mention of the grant of the patent: **22.07.1998**
(21) Application number: 92302166.1
(22) Date of filing: 13.03.1992
(51) Int. Cl.: F16K 24/06

(54) **An air admittance valve**
Ventil zum Einlassen von Luft
Soupape d'admission d'air

(30) Priority: 22.03.1991 GB 9106192
(43) Date of publication of application: 23.09.1992
(73) Proprietor: POLYPIPE PLC, Edlington, Doncaster, Yorkshire DN12 1ES (GB)
(72) Inventor: Earl, Raymond Frederick, Stockbury, Kent ME9 7YL (GB)
(74) Representative: Johnson, Terence Leslie

(56) References cited:
- WO-A-86/04399
- DE-A- 1 550 265
- GB-A- 2 164 128
- US-A- 3 376 884
- US-A- 4 493 339

## Description

The invention relates to an air admittance valve, particularly to the kind commonly found on stack pipes forming part of drainage systems.

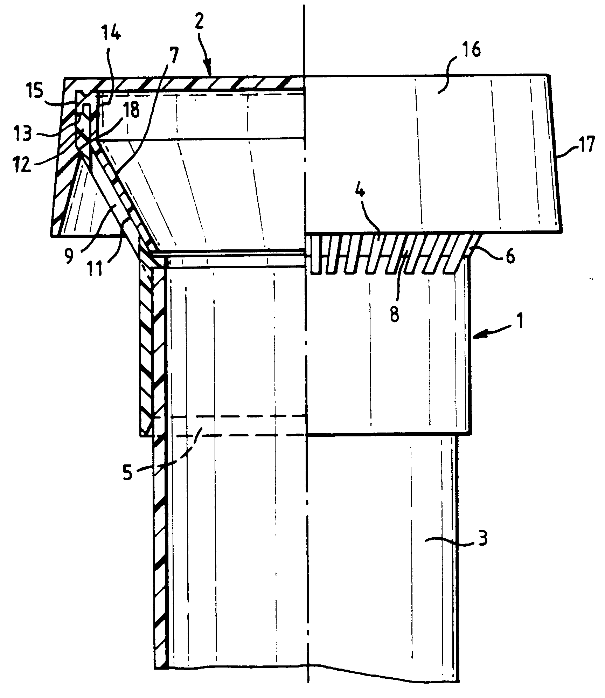

Many air admittance valves currently on the market consist of numerous working parts, are mechanically complex, and are therefore expensive and difficult to manufacture. Examples of prior art valves can be found in WO-A-86/04399, particularly Fig. 6, which discloses a valve tube unit, and an associated end cap which is formed integrally with the valve tube unit. That unit comprises a cylindrical valve tube arranged for fitting in a socket of a pipework system. The upper end of the tube carries an integrally formed frusto-conically shaped annular wall which projects outwardly of the tube to provide a stop for limiting the insertion of the tube into the socket 16, and inwardly of the tube to provide a downwardly-facing frusto-conical valve seating.

According to the invention there is provided an air admittance valve comprising a body which has one end closed by a cap member and an open end which is adapted to be mounted on a pipe, the body including air admittance means through which air can pass from the atmosphere into the pipe and a valve member comprising a resilient membrane movable relative to the air admittance means in response to pressure variation in use in the pipe to open or to close the air admittance means, the air admittance means comprising a frusto-conical wall portion having a plurality of through apertures and an upstanding circular flange, the membrane having a frusto-conical part of complementary shape to an internal surface of the wall portion and sealably engageable therewith to obturate the apertures, characterised by the membrane having an annular integrally formed portion with a downwardly open channel portion which fits over the circular flange and by the cap member defining the closed end which is snap-engaged with the circular flange to secure channel portion which fits over the circular flange and by the cap member defining the closed end which is snap-engaged with the circular flange to secure the membrane and the air admittance means together.

The aperture may comprise a grille-like structure.

The cap may comprise a depending skirt.

An air admittance valve is hereinafter described, by way of example, with reference to the accompanying drawing.

The drawing shows a longitudinal view through an air admittance valve in accordance with the invention, the left hand portion being in elevation.

Referring to the drawing the air admittance valve shown comprises a body 1 which has a closed end 2 and an open end 5 adapted to be mounted on a stack pipe 3, the body 1 including air admittance means 6 through which air can pass from the atmosphere into the pipe 3 and a valve member 7 movable relative to the air admittance means 6 in response to pressure variation in use, in the pipe 3 to open or to close the air admittance means 6, which air admittance means 6 comprises an aperture preferably a plurality of apertures 8 contained in a wall portion 9 of the body 1, the internal surface 11 of the wall portion 9 defining a sealing surface 11 and the valve member 7 comprising a resilient membrane 7 which is complementary in shape to the sealing surface 11 and sealably engageable therewith to obdurate the apertures 8.

The wall portion 9 is substantially frusto-conical in shape and the resilient membrane 7 is of matching frusto-conical configuration. The wall portion 9 comprises a grille-like structure, wherein the slots 8 between adjacent grille members define a plurality of apertures 8.

The resilient membrane 7 also contains an integrally formed portion 14 by means of which it can be retained in position against the frusto-conical wall portion 9. This integrally formed portion 14 corresponds in shape to a circular flange 12 which is joined to the lower in use frusto-conical wall portion. The circular flange has at its outer upper periphery a recessed shoulder 13. The integrally formed portion 14 of the resilient membrane 7 has an upper channel section member which fits over the top of the circular flange 12 and the outer portion 15 of the channel shown lies in the recessed shoulder of the circular flange 12.

The body 1 is closed at one end by a cap 16 which has a downwardly in use extending and slightly outwardly directed skirt 17. The skirt has on its inside a lip 18 which is arranged to extend under the outer periphery of the point where the frusto-conical wall portion 9 joins the circular flange 12. By this means the cap 16 may be made a snap fit onto the body.

In use the body 1 is mounted on the open end 5 of the stack pipe 3. The body 1 may be an interference fit on the stack pipe 3 or may be secured thereto by means of adhesive if appropriate. When there is a positive air pressure in the stack pipe 3, this puts pressure on the inner surface of the resilient membrane 7 and thus causes it to bias into sealable engagement with the frusto-conical wall portion 9 thereby sealing the slots 8 and preventing the escape of noxious gases. When a negative pressure exists in the stack pipe 3 the ambient pressure is greater than this and the resilient membrane 7 is therefore lifted away from the sealing surface 11 and permits air to enter into the system through the slots 8 thereby relieving the reduced pressure and, more importantly, keeping the noxious gases in the stack pipe so that they do not escape to atmosphere.

When the pressure in the stack pipe is at least equalised with ambient air, the resilient membrane returns to seat on the sealing surface again to obviate escape of noxious gases.

## Claims

1. An air admittance valve comprising a body (1) which has one end closed by a cap member (16) and an open end (5) which is adapted to be mounted on a pipe (3), the body (1) including air admittance means (6) through which air can pass from the atmosphere into the pipe (3) and a valve member comprising a resilient membrane (7) movable relative to the air admittance means (6) in response to pressure variation in use in the pipe (3) to open or to close the air admittance means (6), the air admittance means (6) comprising a frusto-conical wall portion (9) having a plurality of through apertures (8), and an upstanding circular flange (12), the membrane having a frusto-conical part of complementary shape to an internal surface of the wall portion and sealably engageable therewith to obturate the apertures, characterised by the membrane (7) having an annular integrally formed portion (14) with a downwardly open channel portion which fits over the circular flange (12) and by the cap member (16) defining the closed end which is snap-engaged with the circular flange (12) to secure the membrane (7) and the air admittance means (6) together.

2. An air admittance valve according to Claim 1, characterised in that the apertures (9) comprise a grille-like structure (4).

3. An air admittance valve according to Claim 2, characterised in that the cap (16) comprises a depending skirt (17).

4. An air admittance valve according to Claim 3 characterised in that the depending skirt (17) is arranged to extend under the outer periphery of the point where the frusto-conical wall portion (9) joins the circular flange (12).

## Patentansprüche

1. Lufteinlaßventil, das folgendes umfaßt: einen Körper (1), der ein Ende aufweist, das von einem Aufsatzglied (16) verschlossen ist, und ein offenes Ende (5), das dazu angepaßt ist, an einem Rohr (3) angebracht zu werden, wobei der Körper (1) ein Lufteinlaßmittel (6) umfaßt, durch das Luft von der Atmosphäre in das Rohr (3) gelangen kann, und ein Ventilglied, das eine elastische Membran (7) umfaßt, die, ansprechend auf eine Druckschwankung beim Einsatz im Rohr (3), relativ zum Lufteinlaßmittel (6) bewegbar ist, um das Lufteinlaßmittel (6) zu öffnen bzw. zu schließen, wobei das Lufteinlaßmittel (6) einen kegelstumpfförmigen Wandabschnitt (9), der eine Mehrzahl von Durchgangsöffnungen (8) aufweist, und einen hochstehenden kreisförmigen Flansch (12) umfaßt, wobei die Membran einen kegelstumpfförmigen Teil aufweist, der eine zu einer inneren Oberfläche des Wandabschnitts komplementäre Gestalt hat und dichtend damit in Eingriff gebracht werden kann, um die Öffnungen zu verschließen, dadurch gekennzeichnet, daß die Membran (7) einen ringförmigen angeformten Abschnitt (14) mit einem nach unten offenen Rinnenabschnitt aufweist, der über den kreisförmigen Flansch (12) paßt, und dadurch, daß das Aufsatzglied (16) das geschlossene Ende definiert, das in Schnappeingriff mit dem kreisförmigen Flansch (12) steht, um die Membran (7) und das Lufteinlaßmittel (6) aneinander zu befestigen.

2. Lufteinlaßventil nach Anspruch 1, dadurch gekennzeichnet, daß die Öffnungen (9) eine gitterartige Struktur (4) umfassen.

3. Lufteinlaßventil nach Anspruch 2, dadurch gekennzeichnet, daß der Aufsatz (16) einen herunterhängenden Mantel (17) umfaßt.

4. Lufteinlaßventil nach Anspruch 3, dadurch gekennzeichnet, daß der herunterhängende Mantel (17) dazu angeordnet ist, sich unter die äußere Peripherie des Punktes zu erstrecken, wo der kegelstumpfförmige Wandabschnitt (9) mit dem kreisförmigen Flansch (12) zusammenstößt.

## Revendications

1. Soupape d'admission d'air comprenant un corps (1) qui possède une extrémité fermée par un élément de recouvrement (16) et une extrémité ouverte (5) qui est conçue pour être montée sur un tuyau (3), le corps (1) englobant un moyen d'admission d'air (6) à travers lequel de l'air peut passer de l'atmosphère dans le tuyau (3), et un élément de soupape comprenant une membrane résiliente (7) mobile par rapport au moyen d'admission d'air (6) en réponse à une variation de pression, en état de marche, dans le tuyau (3) pour ouvrir ou fermer le moyen d'admission d'air (6), le moyen d'admission d'air (6) comprenant une portion de paroi tronconique (9), dans laquelle sont pratiqués plusieurs orifices traversants (8), et une bride circulaire verticale (12), la membrane possédant une partie tronconique dont la configuration épouse celle de la surface interne de la portion de paroi et qui est à même de venir se mettre en contact d'étanchéité avec cette dernière pour obturer les orifices, caractérisée par le fait que la membrane (7) possède une portion solidaire (14) de forme annulaire possédant une portion en forme de canal ouverte vers le bas qui vient se disposer par-dessus la bride circulaire (12) et par le fait que l'élément de recouvrement (16) définit l'extrémité fermée qui vient s'encliqueter avec la bride circulaire (12) pour fixer la membrane (7) et le moyen d'admission d'air (6) l'un à l'autre.

2. Soupape d'admission d'air selon la revendication 1, caractérisée en ce que les orifices (9) comprennent une structure (4) en forme de grille.

3. Soupape d'admission d'air selon la revendication 2, caractérisée en ce que le recouvrement (16) comprend une jupe suspendue (17).

4. Soupape d'admission d'air selon la revendication 3, caractérisée en ce que la jupe suspendue (17) est arrangée pour s'étendre en dessous de la périphérie externe de l'endroit où la portion de paroi tronconique (9) rejoint la bride circulaire (12).
